# EUROPEAN PATENT SPECIFICATION

(11) **EP 2 407 306 B1**
(45) Date of publication and mention of the grant of the patent: **30.09.2015**
(21) Application number: 09827109.1
(22) Date of filing: 09.11.2009
(51) Int. Cl.: B32B 33/00, A47J 36/02, C09D 127/18, C08K 7/18

(54) **NON-STICK COATING AND COATING METHOD THEREOF**
NICHT HAFTENDE BESCHICHTUNG UND BESCHICHTUNGSVERFAHREN DAFÜR
REVÊTEMENT NON COLLANT ET PROCÉDÉ DE REVÊTEMENT CORRESPONDANT

(30) Priority: 24.11.2008 CN 200810162349
(43) Date of publication of application: 18.01.2012
(73) Proprietor: Jinhua Pfluon Technology Co., Ltd., Jinhua, Zhejiang 321016 (CN)
(72) Inventor: SHI, Hang, Zhejiang 321016 (CN)
(74) Representative: van Kooij, Adriaan
(86) International application number: PCT/CN2009/001239
(87) International publication number: WO 2010/057360

(56) References cited:
- WO-A2-2007/070601
- WO-A2-2007/114941
- CN-A- 101 462 390

## Description

### FIELD OF INVENTION

This invention relates to a non-stick coating and coating method thereof, more specifically it relates to a wear resistant and anticorrosive non-stick coating and coating method thereof.

### BACKGROUND OF THE INVENTION

It has been more than 30 years since the first application of non-stick heat resistant coating on cookware such as pot, during which the scientist and technician have developed many different coatings applied to non-stick film, however, the main ingredients of the coatings so far remain the same as a synthetical polymer material of polytetrafluoroethylene (4F for short, PTFE). Polytetrafluoroethylene is a perfluoro-polymer by copolymerization of tetrafluoroethylene. Polytetrafluoroethylene's structure is characterized as high crystallinity, high molecular weight, non-branch in molecular chain, fluorine atoms closely arranged around C-C chain, high C-F bond energy, and shielding effect of fluorine atom against main chain, etc, which all determine the polymer with low friction coefficient, non-absorbing water, non-stick property, incombustibility, good weatherability, broad apply temperature range, and excellent dielectric properties, etc. These provide fluoro-coating equipped with excellent properties not existing in other coatings. But given the mechanical properties, such as wear resistance of fluoro-coating is far from requirement, hence, it is necessary to add inorganic filler into the fluoro-coating to improve the its wear resistance, and the wear resistance of the fluoro-coating increases along with the addition of inorganic filler, however, with reduction of the Corrosion Resistance of the coating.

So far, great efforts have been spent on achieving a non-stick coating with good anti-corrosion and wear resistance by the person skilled in the coating art; however, there are less progress has been made. Chinese invention patent application published description (publication number: CN1500014A)disclosed a non-stick coating of fluoro-polymer exhibits good wear resistance along with good food peel-off, and this coating comprises a primer binder to substrate, a midcoat coated on the primer, and a overcoat coated on the midcoat; wherein the primer contains large ceramic particles encapsulated within it that are distant from each other and pierce into the midcoat, the midcoat is intensified and thicker than the primer so as to hold the overcoat by ceramic particles and prevent the overcoat peeled off due to friction, instead that overcoat and midcoat become one body. The article mentioned above aim at solving the weak wear resistance of the fluoro-coating alone, ceramic particles were added into the primer to enforce the wear resistance of fluoro-coating, nevertheless, as the amount of inorganic filler increase in the primer, the anticorrosion resistance of coating decreased due to reduced compactness of primer.

WO2007/114941 discloses a non-stick coating on a substrate wherein the coating comprises an overcoat and a primer adhering the overcoat to the substrate. The overcoat comprises a fluoropolymer and an effective amount of ceramic particles having an average particle size of at least 10 micrometers to increase the abrasion resistance of the coating.

### SUMMARY OF THE INVENTION

One main purpose of this invention is to overcome shortage of the prior art and to provide a non-stick coating with good wear resistance and anticorrosion resistance synchronously.

Another main purpose of this invention is to provide a coating method of a non-stick coating with good wear resistance and anticorrosion resistance synchronously;

The purposes of this invention are realized as outlined in the appended claims.
A wear resistant and anticorrosive non-stick coating is disclosed that comprises anticorrosive primer, wear resistant midcoat, and non-stick overcoat, wherein said anticorrosive primer contains fluoro-polymer, at least one type of heat resisting polymer binder, pigment filler; the pigment filler and the heat resisting polymer binder weight percentage account for 1%-15% by weight; the wear resistant midcoat is coated on the corrosive resisting primer and contains fluoro-polymer and inorganic filler particles; the overcoat is on the wear resistant midcoat and contains non-stick fluoro-polymer; the bottom and top of partial large ones of said inorganic filler particles pierce through the midcoat and embed the primer and the overcoat respectively.

Preferably, said heat resisting polymer binder is one or more selected from polyamide-imide (PAI), polyether sulfone (PES), polyimide (PI), polyphenylene sulfide(PPS), polyether-ether-ketone(PEEK)and silicone resin.

Said heat resisting polymer binder is preferably one or more selected from PAI, PPS and PES.

Said pigment filler and heat resisting polymer binder is 2%-6% by weight;
The particle size of said pigment filler is less than 5 micrometer;
Particle size of said pigment filler is preferably less than 2 micrometer;
Preferably, dry film thickness of said anticorrosive primer is at least 10 micrometer;
Dry film thickness of said anticorrosive primer is preferably 15 micrometer;
Preferably, said anticorrosive primer composition is aqueous dispersion;
Preferably, said anticorrosive primer composition comprises organic liquid;
Preferably, the Knoop hardness of inorganic filler particles in said wear resistant midcoat is at least 1000;
Preferably, the inorganic filler particles are selected from nitride, carbide, boride, oxide, metal particles or diamond;
Preferably, said inorganic filler particles are preferably silicon carbide, diamond or aluminum oxide;
Preferably, the particle size of said inorganic filler particles is less than 50 micrometer;
Preferably, the particle size of said inorganic filler particles is less than 40 micrometer;
Preferably, the particle size of said inorganic filler particles is in the range of 5 to 35 micrometer, preferable 5-30 micrometer;
Said inorganic filler particles account for 3%~15% by weight of midcoat composition;
Preferably, said inorganic filler particles account for preferably 5%~10% by weight of midcoat composition;
Preferably, said fluoro-polymer is polytetrafluoroethylene (PTFE);
Preferably, dry film thickness of said non-stick coating is higher than 40 micrometers;
Preferably, dry film thickness of said non-stick coating is preferably between 40-55 micrometers;
The ratio of the dry film thickness sum of wear resistant midcoat and non-stick overcoat over the particle size of the largest inorganic filler particles is 0.85 to 1.65.

The coating method for wear resistant and anticorrosive non-stick coating comprises the following steps:
(1) Cleaning and roughening treatment on substrate surface;
(2) Applying anticorrosive primer composition on substrate surface, and drying the primer for 10 minutes while substrate temperature is 120°C ± 10°C;
(3) After cooling primer to ambient temperature manually and naturally, then applying wear resistant midcoat composition on primer;
(4) Before completely drying of wear resistant midcoat, applying overcoat composition on midcoat by means of wet-to-wet;
(5) After coating completed, heating the composite coating applied on substrate surface for 5-10 minutes at the temperature of 380~400°C in order to fuse all coating layers on substrate synchronously;

Preferably, said coating method is spray coating, said roughness treatment method is acidic etching, sand blasting, dull polishing, said substrate is metal or ceramics.

Since the inorganic filler particles can be embedded in the primer and pierce into the overcoat synchronously, compared to conventional coatings, a deflection point of the overcoat is created by the inorganic filler particles in the midcoat piercing into the overcoat, which can help to remove the friction force from the overcoat, therefore increasing the wear resistance of the coating. The overcoat adhering to the midcoat further comprises pearlescent powder and pigment filler, and thus a good visual effect along with good non-stick property of the overcoat can be obtained.

This invention aim to solve the conflict in the traditional coating composition, i.e. with the increased percentage of the inorganic filler particles and reduced relative percentage of resin will enhance the coating's wear resistance but has a negative impact on the coating's compactness and result in the loss of corrosion resistance, thus to provide a coating with three-layer composite structure to maintain wear and corrosive-resistance of the coating. As regard to the primer, choosing the technical solution with the ratio of the applied filler quantity over the resin amount being less than 6% and the particle size of pigment filler is less than 5 micrometers to achieve compact primer as much as possible, by which compact primer can provide good protection for substrate. As regard to the midcoat, two technical features are taken in this invention: firstly, controlling the weight ratio of the inorganic filler particles over the wear resistant midcoat, within the range of 3% - 15%, preferably within 5% - 10%; and secondly controlling the inorganic filler particles' particle size so as to have the ratio of the particle size of the largest particle over the thickness sum of the wear resistant midcoat plus non-stick overcoat between 0.85-1.65. By ways of above two technical features, the midcoat layer can possess good wear resistance characteristic, and in the meanwhile, the negative impact on excellent performance of the anticorrosive primer and the non-stick overcoat is minimized to the least extent, in sum, therefore, a complex structure coating with three simultaneous characteristics, wear resistance, corrosion resistance and non-stick performance can be produced.

### Fluoro-polymer

The fluoro-polymer in this invention to be used in each coating layer is preferably polytetrafluoroethylene (PTFE), whose melt viscosity is no less than 1 × 10⁸ Pa.S at 380°C, and as a matter of fact, PTFE has the highest heat stability among all fluoro-polymer materials. Such PTFE can contain small amount of monomer modifier used in copolymerization to improve the film-forming properties during heating period. Such as perfluoro-alkene, especially hexafluoropropene or perfluoro-ether, especially those with alkyl group containing 1-5 carbon atoms.

Fluoro-polymers generally are commercially available in the dispersion form of polymer in water; said dispersion is the preferable composition form in this invention in term of usage friendly and environmental acceptance. Said dispersion refers to the dispersion that fluoro-polymers are dispersed in water medium stably without any particles sedimentation happening during dispersion usage, and such stability can be realized via controlling polymer particle size and surfactant by the producers.

### Heat resisting polymer binder

According to specific usage in the invention, the heat resistant nontoxic polymer binder is preferable, and said binder component is comprised of the heat stable polymer which will form a film when melts by heating and has a heat stability, the binder is generally a fluorine-free polymer but being able to stick to the fluoro-polymer, meanwhile possessing good adhesiveness to substrate. Polymer containing fluorine can be used as well, and compare to fluoro-polymer, it has better adhesiveness. Furthermore, selecting the aqueous solvent heat resisting polymer binder being preferable in this invention formulation system is hereby fit into the on-going trend of coating development on water-base coatings.

Preferable heat resisting polymer binder is selected from one or more of PAI, PI, PPS, PES, PEEK, silicone resin. For instance, polyamide-imide (PAI) that able to be used continuously beyond 250°C; coating-grade PES, PPS, possessing the characteristics of high temperature resistance, flame retardance, radiation resistance, chemical resistance, electric insulation, and etc, and meanwhile, able to strongly bond to metal, to enhance their non-stickiness and wear resistance after addition of fluoro-resin.

### Inorganic filler particles

The inorganic filler particles used in the midcoat of this invention are selected from boride, nitride, carbide, metal particles, diamond, and etc. The hardness requirement of the inorganic filler particles used in the midcoat in this invention is that the Knoop hardness of the inorganic filler particles is at least 1000.

Knoop hardness of part of above inorganic filler particles as chart follows:

| | |
|---|---|
| Nitride | Aluminium nitride(1225), Zirconium nitride (1510), Titanium nitride (1770) |
| Oxide | Zirconium oxide(1200), Beryllium oxide (1300), Aluminium oxide (2025) |
| Carbide | Tungsten Carbide (1880), Zirconium Carbide (2150), Titanium Carbide (2470), Silicon Carbide (2500) |
| Boride | Zirconium Boride(1560), Aluminium Boride (2500), Titanium Boride(2850) |
| Diamond (8200) | |

Within above inorganic filler particles, the particle size of selected inorganic filler particles is smaller than 50 micrometers. In term of wear resistance alone, if the inorganic filler particles addition quantity remains same, the larger the particle size, the better the wear resistance; whereas, if particle size of the inorganic filler particles remains no change, the more addition quantity of inorganic filler particles, the better wear resistance performance of the coating, in contrary resulting in the significant decrease of the corrosion resistance of the coating, along with loss of adhesion, satiation degree. Hence, the wear resistance and anticorrosive performance of the coating can reach the optimized comprehensive advantage by means of selecting the inorganic filler particles size being preferably between 5 to 35 micrometers and addition quantity thereof being less than 12% by weight of the midcoat. More preferably, the inorganic filler particles percentage by weight is from 5%-10%. This invention chooses silicon carbide, diamond, alumina as the inorganic filler particles taken all above requirements into account.

| Inorganic filler particles And Their Particle Size | |
|---|---|
| SiC | |
| AA1 | Average Particle Size 5 ± 1 µm |
| AA2 | Average Particle Size 10 ± 1µm |
| AA3 | Average Particle Size 15 ± 1µm |
| AA6 | Average Particle Size 30 ± 1.5µm |
| AA9 | Average Particle Size 50 ± 2µm |
| Al₂O₃ | Average Particle Size 1-2µm |
| Average Particle Size Information Provided By Supplier | |

### Other fillers

Except for the large particle inorganic fillers, there are other small particle inorganic fillers as well as other pigment fillers used in the non-sticky coating composition described in this invention. Wherein said pigment fillers particle size is less than 5 micrometers, preferably less than 2 micrometers. Suitable addition filler materials include aluminum or zirconium silicate, titanium dioxide, talc powder, and etc.

### Coating Method

The primer composition can be applied on the substrate by traditional spray coating method in this invention with series of treatments on substrate surface before spraying. In case the substrate is metal, it is necessary for the oil removal treatment on metal to prevent the waterborne coatings from being lack of adhesiveness on substrate and reduced leveling. After oil removal, it is also required for conducting roughness treatment, such as acid etching, sandblasting, sand milling, and etc, on substrate surface to increase contact area between coating and substrate, thereby, increase the coating adhesiveness to substrate.

Before spraying, coat the anticorrosive primer composition on substrate surface upfront, dry the coated primer at 120°C±10°C substrate temperature for 10 minutes, and then after cooling to room temperature, coat the midcoat composition following by applying overcoat composition on the midcoat by means of wet-to-wet. After spraying, the produced composite structural coating is heated at 380~400°C for 5~10 minutes to melt all coating layers synchronously, thereby, forming the non-sticky coating with good adhesiveness on substrate.

The substrate to be used for coating in this invention can be any heat resistant materials, such as metal and ceramics. The examples could include aluminum, iron, stainless steel, high temperature ceramics, and etc.

The controlled coating (dry) thickness: the primer / the midcoat / the overcoat respectively is 10~ 15 micrometers / 20~25 micrometers /8~15 micrometers so as to achieve the max effect.

### Experimental Method

The testing substrate selected in this invention experiments is the die-cast aluminum. Surface roughness is: 8~12µm.

### A.1 Wear resistance testing

### A.1.1 Equipment

A.1.1.1 polishing pad: a nylon net (7447B, 3M corporation) soaked by phenolic resin and alumina with specification of 75±5mm length, 30±5mm width, 5mm thickness is binded to a hard plastics block with similar dimension, and the polishing pad is able to tolerate 15.0±0.2N force downward.

A1.1.2 reciprocating bracket, to hold the tested cooker utilities, able to move 100±5mm in all horizontal direction at speed of 55 reciprocation per minute.

### A.1.2 Experiment flow

Hold the tested facility at the bracket mentioned in A1.1.2, and put the polishing pad below the non-sticky coating, lubricating the coating surface by using 50ml of 5g/L household detergent.

Hold the polishing pad still, and hold the polishing pad stable, from every horizontal direction, perforate work center, remove bracket 50mm±2.5mm forward and backward, repeat 250 recycle, and change polishing pad once each 250 recycles.

Wash the worn facility surface by water; check the damage condition of the coating; record the reciprocation times when the substrate exposes.

### B. Corrosive-resistant resistance test

B1 Visual check the flaws on the coating. According to the requirement of the standard 3 of BS3978, 10% NaCl solution is injected into the container till reaching 1/2 volume of container, and then the solution is boiled for 24 hours, during which time, water is added into the container timely, to meet the requirement of liquid width within 15 mm; it is ok to boil 24 hours continuously or split 24 hours into 4 phase that each phase has 6 hours; if necessary to put lid on the container, the lid should be kept covering on container over the whole boiling process.

B2 Wash the salt stick to container surface, check whether there is flaw on the coating by visual observation immediately, record boiling time while observing flaw which is the result of the coating corrosive-resistant resistance.

B3 Record if there is other flaw.

### Examples

The technical solutions in present invention will be further explained below by referring to the examples below;

### Example 1

Spraying the corrosive resistant primer composition listed in Table 1 on the aluminum substrate surface that has been washed off the grease, and then drying at 120±10°C (substrate temperature) for 10 minutes following by cooling naturally to room temperature; spraying the wear resistant midcoat composition listed in Table 2 on the dry primer layer, and then spraying the overcoat composition listed in table 3 on the midcoat layer by means of wet-to-wet. After spraying, heating the formed 3-layer composite structure coating at 380°C for 8 minutes to make all layers to fuse on the substrate, forming the non-sticky coating with good adhesiveness.

The dry coating thickness (DFT) is determined by eddy current analysis, in which the thickness of the primer/the midcoat/the overcoat is respectively 13 micrometer/23 micrometer /10 micrometer. The bottom part of the large SiC particles AA6 in the midcoat can be partly embedded into the primer without contacting the substrate, because the midcoat thickness 23 micrometer is less than the diameter 30 micrometer of the largest SiC particles AA6 and the primer and the midcoat are fused with each other after heating at 380°C; and furthermore, the large SiC particles AA6 in the midcoat can also pierce into the overcoat since the overcoat is coated on midcoat layer by means of wet-to-wet. The thickness of the overcoat is enough to cover the large SiC particles that pierce through the midcoat inside the overcoat without exposure out of the coating. The quantity of the mixture of 3 different diameter SiC particles in the midcoat composition accounts for 10% by weight of the midcoat composition, and the ratio of the sum of dry film thickness of the wear resistant midcoat and non-sticky overcoat and the largest SiC AA6 particle diameter of inorganic filler is 1.1. Therefore, the composite coating structure that takes SiC particles as the framework forms, of which each layer possesses different performance.

| Table1 - The Primer Composition (1) | |
|---|---|
| Ingredient | % By Weight |
| PAI | 9.9 |
| Water | 48.4 |
| N- methyl pyrrolidone (NMP) | 16.5 |
| PTFE (Solid dispersed in water) | 22.8 |
| Levelling agent | 0.8 |
| Carbon Black Pigment(1-2µm) | 1.6 |
| Total: | 100.0 |
| Solid content: | 34.3% |
| Pigment and Resin Weight ratio | 4.89% |

| Table 2 - The Midcoat Composition | |
|---|---|
| Ingredient | % By Weight |
| PTFE (Solid dispersed in water) | 39.0 |
| SiC AA1 | 2.5 |
| SiC AA2 | 5.0 |
| SiC AA6 | 2.5 |
| Acrylic Resin | 3.0 |
| pearlescent powder | 0.65 |
| Propanediol | 0.5 |
| Surfactant | 1.45 |
| 100# Solvent | 1.2 |
| Levelling agent | 0.37 |
| Water | 42.08 |
| Ultramarine (1-2µm) | 0.5 |
| Carbon Black (1-2µm) | 1.25 |
| Total: | 100.0 |
| Solid content %: | 54.4% |

| Table 3 - The Overcoat Composition | |
|---|---|
| Ingredient | % By Weight |
| PTFE (Solid dispersed in water) | 41.05 |
| Sodium Dodecyl Sulfate | 0.4 |
| Acrylic Resin | 3.3 |
| pearlescent powder | 0.5 |
| Propanediol | 2.5 |
| Surfactant | 3.06 |
| 100# Solvent | 0.98 |
| Levelling agent | 0.37 |
| Water | 47.84 |
| Total: | 100.0 |
| Solid content %: | 45.2% |

### Example 2

This example is same as example 1 except that the corrosive resistant primer composition is selected from the corrosive resistant primer composition listed in Table 4, and the thickness of the primer/the midcoat/the overcoat is respectively 12.5 micrometer/25 micrometer /10 micrometer.

| Table 4 - The Primer Composition (2) | |
|---|---|
| Ingredient | % By Weight |
| PES | 13.0 |
| PTFE | 20.0 |
| NMP | 8.2 |
| Triethanolamine | 2.5 |
| Glycerol | 3.7 |
| Levelling agent | 0.8 |
| Deionized Water | 49.45 |
| Carbon Black Pigment(1-2µm) | 1.6 |
| Surfactant | 0.75 |
| Total: | 100.0 |
| Solid content %: | 34.6% |
| Pigment and Resin Weight ration | 4.82% |

### Example 3

This example is same as example 1 except that the corrosive resistant primer composition is selected from the corrosive resistant primer composition listed in Table 5, and the thickness of the primer/the midcoat/the overcoat is respectively 13.5 micrometer/24 micrometer /9 micrometer.

| Table 5 - The Primer Composition (3) | |
|---|---|
| Ingredient | % By Weight |
| PPS | 12.0 |
| PTFE | 20.4 |
| NMP | 3.0 |
| Levelling agent | 0.3 |
| Triethanolamine | 0.78 |
| Glycerol | 0.91 |
| Surfactant | 0.72 |
| Water | 59.2 |
| Carbon Black Pigment(1-2µm) | 1.6 |
| Total: | 100.0 |
| Solid content %: | 34.0% |
| Pigment and Resin Weight ratio | 4.94% |

### Example 4

This example is same as example 1 except that the corrosive resistant primer composition is selected from the corrosive resistant primer composition listed in Table 6, and the thickness of the primer/the midcoat/the overcoat is respectively 13 micrometer/25 micrometer /10 micrometer.

| Table 6 - The Primer Composition (4) | |
|---|---|
| Ingredient | % By Weight |
| PAI | 5.2 |
| PPS | 8.0 |
| PTFE | 19.4 |
| NMP | 6.6 |
| Triethanolamine | 2.0 |
| Levelling agent | 0.8 |
| Deionized Water | 56.6 |
| Carbon Black Pigment(1-2µm) | 1.6 |
| Surfactant | 0.8 |
| Total: | 100.0 |
| Solid content %: | 34.2% |
| Pigment and Resin Weight ratio | 4.91% |

### Example 5

This example is same as example 1 except that the corrosive resistant primer composition is selected from the corrosive resistant primer composition listed in Table 7, and the thickness of the primer/the midcoat/the overcoat is respectively 12.5 micrometer/25 micrometer /8 micrometer.

| Table 7 - The Primer Composition (5) | |
|---|---|
| Ingredient | % By Weight |
| PAI | 2.8 |
| PES | 11.0 |
| PTFE | 19.6 |
| NMP | 2.0 |
| Triethanolamine | 3.0 |
| Levelling agent | 0.8 |
| Deionized Water | 58.4 |
| Carbon Black Pigment(1-2µm) | 1.6 |
| Surfactant | 0.8 |
| Total: | 100.0 |
| Solid content %: | 35.0% |
| Pigment and Resin Weight ratio | 4.79% |

### Example 6

This example is same as example 1 except that the corrosive resistant primer composition is selected from the corrosive resistant primer composition listed in Table 8, and the thickness of the primer/the midcoat/the overcoat is respectively 14 micrometer/24 micrometer /9 micrometer.

| Table 8 - The Primer Composition (6) | |
|---|---|
| Ingredient | % By Weight |
| PAI | 11.8 |
| FEP | 21.0 |
| NMP | 15.8 |
| Triethanolamine | 3.0 |
| Levelling agent | 0.8 |
| Deionized Water | 45.2 |
| Carbon Black Pigment(1-2µm) | 1.6 |
| Surfactant | 0.8 |
| Total: | 100.0 |
| Solid content %: | 34.4% |
| Pigment and Resin Weight ratio | 4.87% |

The key difference of the non-sticky coatings in the example 1-6 is the heat resisting polymer binders used in the primer composition, and the wear resistance of each wear resistant coating in the example 1-6 is listed in below Table 9:

| Table 9 - Corrosion Resistance Comparison (1) | | | |
|---|---|---|---|
| Example | Thickness of the Primer(µm) | Thickness of 3-layer Film(µm) | Resistance Time to Salt Water (h.) |
| 1 | 13.0 | 46.0 | 60 |
| 2 | 12.5 | 47.5 | 54 |
| 3 | 13.5 | 46.5 | 54 |
| 4 | 13.0 | 48.0 | 60 |
| 5 | 12.5 | 45.5 | 60 |
| 6 | 14.0 | 47.0 | 54 |

The selection of the heat resisting polymer binder used in the primer composition has little impact on the wear resistance, therefore, it can be selected based on cost and process condition.

### Example 7

This example is same as example 1 except that the corrosive resistant primer composition is selected from the corrosive resistant primer composition listed in Table 10, and the thickness of the primer/the midcoat/the overcoat is respectively 12 micrometer/25 micrometer /9.5 micrometer.

| Table 10 - The Primer Composition (7) | |
|---|---|
| Ingredient | % By Weight |
| PAI | 10.5 |
| Water | 48.7 |
| N- methyl pyrrolidone | 17.0 |
| PTFE(Solid dispersed in water) | 23.5 |
| Levelling agent | 0.8 |
| Carbon Black Pigment(1-2µm) | 0.5 |
| Total: | 100.0 |
| Solid content %: | 34.5% |
| Pigment and Resin Weight ratio | 1.47% |

### Example 8

This example is same as example 1 except that the corrosive resistant primer composition is selected from the corrosive resistant primer composition listed in Table 11, and the thickness of the primer/the midcoat/the overcoat is respectively 13 micrometer/24.5 micrometer /10 micrometer.

| Table 11 - The Primer Composition (8) | |
|---|---|
| Ingredient | % By Weight |
| PAI | 8.8 |
| Water | 50.2 |
| N- methyl pyrrolidone | 15.5 |
| PTFE(Solid dispersed in water) | 21.5 |
| Levelling agent | 0.8 |
| Carbon Black Pigment(1-2µm) | 3.2 |
| Total: | 100.0 |
| Solid content %: | 33.5% |
| Pigment and Resin Weight ratio | 10.56% |

### Example 9

This example is same as example 1 except that the corrosive resistant primer composition is selected from the corrosive resistant primer composition listed in Table 12, and the thickness of the primer/the midcoat/the overcoat is respectively 13 micrometer/25 micrometer /9 micrometer.

| Table 12 - The Primer Composition (9) | |
|---|---|
| Ingredient | % By Weight |
| PAI | 8.6 |
| Water | 49.9 |
| N- methyl pyrrolidone | 15.3 |
| PTFE(Solid dispersed in water) | 19.0 |
| Levelling agent | 0.8 |
| Carbon Black Pigment(1-2µm) | 6.4 |
| Total: | 100.0 |
| Solid content %: | 34.0% |
| Pigment and Resin Weight ratio | 23.19% |

### Example 10

This example is same as example 1 except that the corrosive resistant primer composition is selected from the corrosive resistant primer composition listed in Table 13, and the thickness of the primer/the midcoat/the overcoat is respectively 12.5 micrometer/24 micrometer /10 micrometer.

| Table 13 - The Primer Composition (10) | |
|---|---|
| Ingredient | % By Weight |
| PAI | 8.5 |
| Water | 48.97 |
| N- methyl pyrrolidone | 14.8 |
| PTFE(Solid dispersed in water) | 17.4 |
| Levelling agent | 0.8 |
| Carbon Black Pigment(1-2µm) | 9.6 |
| Total: | 100.0 |
| Solid content %: | 35.5% |
| Pigment and Resin Weight ratio | 37.07% |

The key difference of the non-sticky coating in example 1 and example 7-10 is the weight percentage difference of the major ingredient in the primer composition; in particular, huge difference of pigment % by weight and resin % by weight, and the impact of pigment % by weight and resin % by weight on wear resistance is shown in below Table 14:

| Table 14 - Corrosion Resistance Comparison (2) | | | | |
|---|---|---|---|---|
| Example | Pigment and Resin (wt%) | Thickness of the Primer(µm) | Thickness of 3-layer Film(µm) | Resistance Time to Salt Water (h.) |
| 1 | 4.89 | 13 | 46 | 60 |
| 7 | 1.47 | 12 | 46.5 | 66 |
| 8 | 10.56 | 13 | 47.5 | 48 |
| 9 | 23.19 | 13 | 47 | 36 |
| 10 | 37.07 | 12.5 | 46.5 | 30 |

The wear resistance performance of the non-sticky coating in the example 1 and example 7 is similar, however, as the incremental pigment percentage by weight in resin, the wear resistance performance in example 8, 9, 10 became worse and worse; in view of application convenience and operability, the example 7 is lack of covering power due to the less pigment quantity used, therefore, and the pigment and resin weight ratio is preferably selected as the one in example 1.

### Example 11

This example is same as example 1 except that the particle size of the Carbon Black pigment in the corrosive resistant primer composition is 5µm, and the thickness of the primer/the midcoat/the overcoat is respectively 12.5 micrometer/24 micrometer /10 micrometer.

### Example 12

This example is same as example 1 except that the particle size of the Carbon Black pigment in the corrosive resistant primer composition is 10µm, and the thickness of the primer/the midcoat/the overcoat is respectively 14 micrometer/22 micrometer /9.5 micrometer.

### Example 13

This example is same as example 1 except that the particle size of the Carbon Black pigment in the corrosive resistant primer composition is 15µm, and the thickness of the primer/the midcoat/the overcoat is respectively 14.5 micrometer/24.5 micrometer /10 micrometer.

The key difference of the non-sticky coating in example 1 and example 11-13 is the different particle size of pigment (Carbon Black) in the primer composition, and the impact of the particle size of the pigment filler (Carbon Black) on the wear resistance performance is shown in Table 15 below:

| Table 15 - Corrosion Resistance Comparison (3) | | | | |
|---|---|---|---|---|
| Example | Carbon Black Pigment Particle Size (µm) | Thickness of the Primer(µm) | Thickness of 3-layer Film(µm) | Resistance Time to Salt Water (h.) |
| 1 | 1~2 | 13 | 47 | 60 |
| 11 | 5 | 12.5 | 46.5 | 54 |
| 12 | 10 | 14 | 45.5 | 36 |
| 13 | 15 | 14.5 | 47 | 24 |

As shown in above table, the impact of the particle size of the pigment filler (Carbon Black) on the wear resistance performance is as the particle size of the pigment filler (Carbon Black) goes bigger and bigger, the wear resistance performance goes worse and worse, hence, it is necessary to keep the particle size of pigment filler in the primer as small as possible.

### In summary:

The key factors that influence the wear resistance performance of the coating are the pigment percentage and resin percentage in the primer by weight as well as the particle size of the pigment filler. Considering the coating covering power and construction convenience, it shouldn't select the pigment quantity as being zero in the primer. Hereby, the preferable ratio of pigment quantity and resin quantity by weight is 4.89%, and the particle size of the pigment filler is preferably less than 2 micrometer.
In the example 1, the wear resistance of the coating is linked with the addition quantity and particle size of SiC in the midcoat composition. It has been described in detail in China Patent ZL 99111835.9 the specific ratio of the addition quantity and different particle size of SiC. In present invention, it is necessary to optimize the addition quantity and selected particle size of SiC, under the condition of assuring the Corrosion Resistance performance, to maximize the wear resistance performance, thereby, to achieve a non-sticky coating being of comprehensive performance in term of expressing wear and corrosion resistance synchronously.
The following examples 14-18, under the condition of blend of SiC of three different particle size added to the midcoat composition and the particle size type being unchanged, the wear resistance and corrosion resistance of the coating film is measure by changing the weight percentage of SiC in the midcoat composition.

### Example 14

This example is same as example 1 except that the addition quantity of the mixture of 3 different particle size SiC in the midcoat composition is 0% by weight, and the thickness of the primer/the midcoat/the overcoat is respectively 12.5 micrometer/24 micrometer /10 micrometer.

### Example 15

This example is same as example 1 except that the addition quantity of the mixture of 3 different particle size SiC in the midcoat composition is 2% by weight, wherein, AA1 is 0.5% , AA2 is 1%, AA6 is 0.5%, and the thickness of the primer/the midcoat/the overcoat is respectively 13 micrometer/23 micrometer /9 micrometer.

### Example 16

This example is same as example 1 except that the addition quantity of the mixture of 3 different particle size SiC in the midcoat composition is 5% by weight, wherein, AA1 is 1.25%, AA2 is 2.5%, AA6 is 1.25%, and the thickness of the primer/the midcoat/the overcoat is respectively 15 micrometer/22 micrometer /10 micrometer.

### Example 17

This example is same as example 1 except that the addition quantity of the mixture of 3 different particle size SiC in the midcoat composition is 15% by weight, wherein, AA1 is 3.75%, AA2 is 7.5%, AA6 is 3.75%, and the thickness of the primer/the midcoat/the overcoat is respectively 14 micrometer/23.5 micrometer /9 micrometer.

| Table 16 - Corrosion Resistance Comparison (4) | | | | |
|---|---|---|---|---|
| Example | SiC and Midcoat (wt%) | Thickness of 3-layer Film(µm) | Friction Cycles | Resistance Time to Salt Water (h.) |
| 14 | 0 | 46.5 | 700 | 96 |
| 15 | 2 | 45.0 | 3500 | 78 |
| 16 | 5 | 47.0 | 15500 | 72 |
| 1 | 10 | 47.0 | 42000 | 60 |
| 17 | 15 | 46.5 | 55000 | 36 |

Based on test results in the wear and corrosion resistance comparison table (4) in table 16, it is obvious to get the conclusion: when the SiC quantity is zero, the coating is easily worn and has worst wear resistance performance. As the SiC quantity increases, the wear resistance will be improved and enhanced, however, the extent of wear resistance enhancement will be reduced after the SiC quantity reaches certain level.
Although the Corrosion Resistance will go worse as incremental SiC addition quantity, the overall percentage is not remarkable; only if the SiC quantity increases by 15% (example 17), the reduction extent will be obvious.
In view of comprehensive performance of both wear and corrosion resistance, the addition quantity of the mixture of 3 different particle size SiC in the midcoat composition is preferably 5% and 10% by weight; in present invention, the particularly preferable is 10%;
In below example 18-21, under condition of constant addition quantity and mixing ratio by weight of the mixture of 3 different particles size SiC in the midcoat composition, the wear and corrosion resistance performance will be determined by varying the particle size type of the 3 different particle size SiC in the midcoat composition.

### Example 18

This example is same as example 1 except the particle type of the 3 different particle size SiC in the midcoat composition is different, specifically AA1/AA2/AA3, and the thickness of the primer/the midcoat/the overcoat is respectively 12.5 micrometer/24 micrometer /10 micrometer, and meanwhile, the ratio of the dry film thickness sum of wear resistant midcoat and non-sticky overcoat over the diameter of the largest inorganic filler particles SiC AA3 is 2.267.

### Example 19

This example is same as example 1 except the particle type of the 3 different particle size SiC in the midcoat composition is different, specifically AA2/AA3/AA6, and the thickness of the primer/the midcoat/the overcoat is respectively 15 micrometer/22 micrometer /9 micrometer, and meanwhile, the ratio of the dry film thickness sum of wear resistant midcoat and non-sticky overcoat over the diameter of the largest inorganic filler particles SiC AA6 is 1.033.

### Example 20

This example is same as example 1 except the particle type of the 3 different particle size SiC in the midcoat composition is different, specifically AA2/AA3/AA9, and the thickness of the primer/the midcoat/the overcoat is respectively 13 micrometer/24.5 micrometer /10 micrometer, and meanwhile, the ratio of the dry film thickness sum of wear resistant midcoat and non-sticky overcoat over the diameter of the largest inorganic filler particles SiC AA9 is 0.69.

### Example 21

This example is same as example 1 except the particle type of the 3 different particle size SiC in the midcoat composition is different, specifically AA3/AA6/AA9, and the thickness of the primer/the midcoat/the overcoat is respectively 15 micrometer/25 micrometer /8 micrometer, and meanwhile, the ratio of the dry film thickness sum of wear resistant midcoat and non-sticky overcoat over the diameter of the largest inorganic filler particles SiC AA9 is 0.66.

| | | | | | |
|---|---|---|---|---|---|
| Table 17 - Corrosion Resistance Comparison (5) | | | | | |

| Example | SiC (type) | Ratio | Thickness of 3-layer Film(µm) | Friction Cycles | Resistance Time to Salt Water (h.) |
|---|---|---|---|---|---|
| 1 | AA1/AA2/AA6 | 1.1 | 47.0 | 42000 | 60 |
| 18 | AA1/AA2/AA3 | 2.267 | 46.5 | 12500 | 72 |
| 19 | AA2/AA3/AA6 | 1.033 | 46.0 | 48000 | 54 |
| 20 | AA2/AA3/AA9 | 0.69 | 47.5 | 67000 | 24 |
| 21 | AA3/AA6/AA9 | 0.66 | 48.0 | 72000 | 24 |

| | | | | | |
|---|---|---|---|---|---|
| Notes: Ratio is the ratio of the sum of dry film thickness of the wear resistant midcoat and non-sticky overcoat and the largest SiC particle diameter of inorganic filler. | | | | | |

Based on test results in the wear and corrosion resistance comparison table (5) in table 17, it is obvious to get the conclusion: when the SiC particle diameter is too small, the coating is easily worn and has worse wear resistance performance. As the SiC quantity increases, especially addition of large particle, the wear resistance will be improved and enhanced significantly; however, when the large particle SiC is too big relative to the thickness (40-50µm) of the coating, the plainness and smoothness of the coating will be reduced greatly due to the uncovered large SiC particle by the coating, which will influence the non-stick property of the coating.
Following the addition quantity of SiC particle increases, the Corrosion Resistance becomes worse, especially when too large particle SiC is selected which might pierce through the primer and contact with the substrate, and meanwhile, might pierce through the overcoat, the whole coating will lose its compactness, clearly, lose its Corrosion Resistance.
In view of the non stick coating being of comprehensive performance of synchronous wear and corrosion resistance, the 3 different particle type of SiC are preferable AA1/AA2/AA6 (the ratio of the sum of dry film thickness of the wear resistant midcoat and non-sticky overcoat and the largest SiC particle diameter of inorganic filler is 1.1) and AA2/AA3/AA6 (the ratio of the sum of dry film thickness of the wear resistant midcoat and non-sticky overcoat and the largest SiC particle diameter of inorganic filler is 1.033), and in present invention, the preferable is AA1/AA2/AA6 with particular intent;

### In summary:

The addition quantity and particle size of the SiC in the midcoat composition have directly impact on the wear and corrosion resistance performance of non-sticky coating, and in present invention, the example 1 is preferable. With different requirements on these two performance, the examples 16, wherein the particle type of the SiC in the midcoat composition is AA1/AA2/AA6(ratio by weight: 1/2/1), and the addition quantity in the midcoat composition by weight is 5%, is also preferable, and the examples 19, wherein the particle size type of the SiC in the midcoat composition is AA2/AA3/AA6 (ratio by weight: 1/2/1), and the addition quantity in the midcoat composition by weight is 10%, is also preferable.

## Claims

1. A wear resistant and anticorrosive non-sticky coating wherein it comprises anticorrosive primer, wear resistant midcoat, and non-sticky overcoat, wherein said anticorrosive primer contains fluoro-polymer, at least one type of heat resisting polymer binder, and pigment filler, the wear resistant midcoat is coated on the corrosive resisting primer and contains fluoro-polymer and inorganic filler particles; the overcoat is on the wear resistant midcoat and contains non-sticky fluoro-polymer; the bottom and top of partial large ones of said inorganic filler particles pierce through the midcoat and embed the primer and the overcoat respectively; wherein said pigment filler and heat resisting polymer binder weight percentage account for 2%-6% by weight; wherein the particle size of said pigment filler is less than 5 micrometer; wherein the ratio of the sum of the dry film thickness of the wear resistant midcoat and the non-sticky overcoat over the particle size of the largest inorganic filler particles is 0.85 to 1.65; wherein said inorganic filler particles account for 3% to 15% by weight of the wear resistant midcoat composition.

2. The wear resistant and anticorrosive non-sticky coating according to claim 1, wherein said heat resisting polymer binder is one or more selected from polyamide-imide (PAI), polyether sulfone (PES), polyimide (PI), polyphenylene sulfide(PPS), polyether-ether-ketone (PEEK), and silicone resin.

3. The wear resistant and anticorrosive non-sticky coating according to claim 1 or 2, wherein the heat resisting polymer binder is one or more selected from PAI, PPS and PES.

4. The wear resistant and anticorrosive non-sticky coating according to claim 1, wherein the particle size of said pigment filler is less than 2 micrometer.

5. The wear resistant and anticorrosive non-sticky coating according to claim 1, wherein the dry film thickness of said anticorrosive primer is at least 10 micrometer.

6. The wear resistant and anticorrosive non-sticky coating according to claim 1 or 5, wherein the dry film thickness of said anticorrosive primer is 15 micrometer.

7. The wear resistant and anticorrosive non-sticky coating according to claim 1, wherein said anticorrosive primer composition is an aqueous dispersion.

8. The wear resistant and anticorrosive non-sticky coating according to claim 1, wherein said anticorrosive primer composition comprises organic liquid.

9. The wear resistant and anticorrosive non-sticky coating according to claim 1, wherein the Knoop hardness of inorganic filler particles in said wear resistant midcoat is at least 1000.

10. The wear resistant and anticorrosive non-sticky coating according to claim 1, wherein the inorganic filler particles are selected from nitride, carbide, boride, oxide, metal particles or diamond.

11. The wear resistant and anticorrosive non-sticky coating according to claim 1 or 10, wherein said inorganic filler particles is preferably silicon carbide, diamond or aluminum oxide.

12. The wear resistant and anticorrosive non-sticky coating according to claim 1 or 10, wherein the particle size of said inorganic filler particles is less than 50 micrometer.

13. The wear resistant and anticorrosive non-sticky coating according to claim 1 or 10, wherein the particle size of said inorganic filler particles is less than 40 micrometer.

14. The wear resistant and anticorrosive non-sticky coating according to claim 1 or 10, wherein the particle size of said inorganic filler particles is between 5 to 35 micrometer.

15. The wear resistant and anticorrosive non-sticky coating according to claim 1, wherein said inorganic filler particles account for 5% to 10% by weight of the wear resistant midcoat composition.

16. The wear resistant and anticorrosive non-sticky coating according to claim 1, wherein said fluoro-polymer is polytetrafluoroethylene (PTFE).

17. The wear resistant and anticorrosive non-sticky coating according to claim 1, wherein dry film thickness of said non-sticky coating is higher than 40 micrometers.

18. The wear resistant and anticorrosive non-sticky coating according to claim 1 or 17, wherein dry film thickness of said non-sticky coating is between 40-55 micrometers.

19. A coating method for wear resistant and anticorrosive non-sticky coating as defined in any one of claims 1 to 18, comprising the steps of:
(1) cleaning and roughening treatment to a substrate surface;
(2) applying the anticorrosive primer composition on the substrate surface, and drying primer for 10 minutes while the substrate temperature is 120°C±10°C;
(3) after cooling primer to ambient temperature manually and naturally, then applying wear resistant midcoat composition on the primer;
(4) before completely drying of the wear resistant midcoat, applying overcoat composition on the midcoat by means of wet-to-wet;
(5) after coating is completed, heating the composite coating applied on substrate surface for 5-10 minutes at the temperature of 380~400°C in order to fuse all coating layers on substrate synchronously.

20. The coating method for wear resistant and anticorrosive non-sticky coating according to claim 19, wherein said coating method is spray coating, said roughness treatment method is acidic etching, sand blasting, dull polishing, said substrate is metal or ceramics.

## Patentansprüche

1. Verschleißfeste und korrosionsverhütende nicht klebende Beschichtung, umfassend einen korrosionsverhütenden Haftvermittler, eine verschleißfeste Mittelschicht und eine nicht klebende Oberschicht,
wobei der korrosionsverhütende Haftvermittler Fluorpolymer, zumindest einen Typ eines wärmebeständigen Polymerbinders und einen Pigmentfüllstoff enthält,
wobei die verschleißfeste Mittelschicht auf den korrosionsbeständigen Haftvermittler aufgetragen ist und Fluorpolymer und anorganische Füllstoffpartikel enthält,
wobei die Oberschicht sich auf der verschleißfesten Mittelschicht befindet und nicht klebendes Fluorpolymer enthält,
wobei die Unterseite und die Oberseite von teilweise großen Partikeln der anorganischen Füllstoffpartikel durch die Mittelschicht hindurch stechen und den Haftvermittler bzw. die Oberschicht einbetten,
wobei der Pigmentfüllstoff und der wärmebeständige Polymerbinder prozentual 2-6 Gewichts-% ausmachen,
wobei die Partikelgröße des Pigmentfüllstoffs kleiner ist als 5 Mikrometer,
wobei das Verhältnis der Summe der Dicke des trockenen Films der verschleißfesten Mittelschicht und der nicht klebenden Oberschicht gegenüber der Partikelgröße der größten anorganischen Füllstoffpartikel 0,85 bis 1,65 beträgt
und wobei die anorganischen Füllstoffpartikel 3 bis 15 Gewichts-% der verschleißfesten Mittelschichtzusammensetzung ausmachen.

2. Verschleißfeste und korrosionsverhütende nicht klebende Beschichtung nach Anspruch 1, wobei der wärmebeständige Polymerbinder durch einen oder mehrere aus Polyamid-imid (PAI), Polyethersulfon (PES), Polyimid (PI), Polyphenylensulfid (PPS), Polyether-etherketon (PEEK) und Silikonharz ausgewählte(n) Binder gebildet ist.

3. Verschleißfeste und korrosionsverhütende nicht klebende Beschichtung nach Anspruch 1 oder 2, wobei der wärmebeständige Polymerbinder durch einen oder mehrere aus PAI, PPS und PES ausgewählte(n) Binder gebildet ist.

4. Verschleißfeste und korrosionsverhütende nicht klebende Beschichtung nach Anspruch 1, wobei die Partikelgröße des Pigmentfüllstoffs kleiner ist als 2 Mikrometer.

5. Verschleißfeste und korrosionsverhütende nicht klebende Beschichtung nach Anspruch 1, wobei die Dicke des trockenen Films des korrosionsverhütenden Haftvermittlers zumindest 10 Mikrometer beträgt.

6. Verschleißfeste und korrosionsverhütende nicht klebende Beschichtung nach Anspruch 1 oder 5, wobei die Dicke des trockenen Films des korrosionsverhütenden Haftvermittlers zumindest 15 Mikrometer beträgt.

7. Verschleißfeste und korrosionsverhütende nicht klebende Beschichtung nach Anspruch 1, wobei die Zusammensetzung des korrosionsverhütenden Haftvermittlers eine wässrige Dispersion ist.

8. Verschleißfeste und korrosionsverhütende nicht klebende Beschichtung nach Anspruch 1, wobei die Zusammensetzung des korrosionsverhütenden Haftvermittlers eine organische Flüssigkeit umfasst.

9. Verschleißfeste und korrosionsverhütende nicht klebende Beschichtung nach Anspruch 1, wobei die Knoop-Härte der anorganischen Füllstoffpartikel in der verschleißfesten Mittelschicht zumindest 1000 beträgt.

10. Verschleißfeste und korrosionsverhütende nicht klebende Beschichtung nach Anspruch 1, wobei die anorganischen Füllstoffpartikel aus Nitrid, Karbid, Borid, Oxid, Metallpartikeln oder Diamant ausgewählt sind.

11. Verschleißfeste und korrosionsverhütende nicht klebende Beschichtung nach Anspruch 1 oder 10, wobei die anorganischen Füllstoffpartikel vorzugsweise aus Siliziumkarbid, Diamant oder Aluminiumoxid bestehen.

12. Verschleißfeste und korrosionsverhütende nicht klebende Beschichtung nach Anspruch 1 oder 10, wobei die Partikelgröße der anorganischen Füllstoffpartikel kleiner ist als 50 Mikrometer.

13. Verschleißfeste und korrosionsverhütende nicht klebende Beschichtung nach Anspruch 1 oder 10, wobei die Partikelgröße der anorganischen Füllstoffpartikel kleiner ist als 40 Mikrometer.

14. Verschleißfeste und korrosionsverhütende nicht klebende Beschichtung nach Anspruch 1 oder 10, wobei die Partikelgröße der anorganischen Füllstoffpartikel zwischen 5 bis 35 Mikrometer liegt.

15. Verschleißfeste und korrosionsverhütende nicht klebende Beschichtung nach Anspruch 1, wobei die anorganischen Füllstoffpartikel 5 bis 10 Gewichts-% der verschleißfesten Mittelschichtzusammensetzung ausmachen.

16. Verschleißfeste und korrosionsverhütende nicht klebende Beschichtung nach Anspruch 1, wobei das Fluorpolymer Polytetrafluorethylen (PTFE) ist.

17. Verschleißfeste und korrosionsverhütende nicht klebende Beschichtung nach Anspruch 1, wobei die Dicke des trockenen Films der nicht klebenden Schicht größer ist als 40 Mikrometer.

18. Verschleißfeste und korrosionsverhütende nicht klebende Beschichtung nach Anspruch 1 oder 17, wobei die Dicke des trockenen Films der nicht klebenden Schicht zwischen 40-55 Mikrometer liegt.

19. Beschichtungsverfahren für eine verschleißfeste und korrosionsverhütende nicht klebende Beschichtung nach einem der Ansprüche 1 bis 18, umfassend die Schritte:
(1) Reinigungs- und Aufraubehandlung einer Substratoberfläche,
(2) Aufbringen der korrosionsverhütenden Haftvermittlerzusammensetzung auf die Substratoberfläche und 10-minütiges Trocknen des Haftvermittlers, während die Substrattemperatur 120°C ± 10°C beträgt,
(3) Aufbringen der verschleißfesten Mittelschichtzusammensetzung auf den Haftvermittler nach manuellem und natürlichem Abkühlen des Haftvermittlers auf Umgebungstemperatur,
(4) Nass-auf-Nass-Aufbringen der Oberschichtzusammensetzung auf die Mittelschicht vor vollständigem Trocknen der verschleißfesten Mittelschicht,
(5) 5- bis 10-minütiges Erwärmen des auf die Substratoberfläche aufgebrachten Verbundüberzugs bei der Temperatur von 380°C ~400°C, nachdem das Überziehen abgeschlossen ist, um sämtliche Überzugsschichten auf dem Substrat gleichzeitig zu verschmelzen.

20. Beschichtungsverfahren für eine verschleißfeste und korrosionsverhütende nicht klebenden Beschichtung nach Anspruch 19, wobei das Beschichtungsverfahren ein Sprühbeschichten ist, wobei das Aufraubehandlungsverfahren ein Säureätzen, Sandblasen, Mattpolieren ist und wobei das Substrat Metall oder Keramik ist.

## Revendications

1. Revêtement antiadhésif résistant à l'usure et anticorrosif qui comprend une couche primaire anticorrosive, un revêtement intermédiaire qui résiste à l'usure, et un revêtement supérieur antiadhésif, dans lequel ladite couche primaire anticorrosive contient un polymère fluoré, au moins un type de liant polymère qui résiste à la chaleur, et un agent de remplissage pigmenté, le revêtement intermédiaire qui résiste à l'usure est déposé sur la couche primaire qui résiste à la corrosion et contient un polymère fluoré et des particules d'agent de remplissage inorganique ; le revêtement supérieur se situe sur la couche intermédiaire qui résiste à l'usure et contient un polymère fluoré antiadhésif ; le fond et le dessus d'une partie de grandes particules d'agent de remplissage inorganique parmi lesdites particules d'agent de remplissage inorganique, percent à travers le revêtement intermédiaire et s'enfouissent dans la couche primaire et le revêtement supérieur, respectivement ; dans lequel le pourcentage en poids dudit agent de remplissage pigmenté et dudit liant polymère qui résiste à la chaleur est compris entre 2 % en poids et 6 % en poids ; dans lequel la taille des particules dudit agent de remplissage pigmenté est inférieure à 5 micromètres ; dans lequel le rapport de la somme de l'épaisseur du film sec du revêtement intermédiaire qui résiste à l'usure et du revêtement supérieur antiadhésif, sur la taille des particules des plus grandes particules de l'agent de remplissage inorganique, est compris entre 0,85 et 1,65 ; dans lequel lesdites particules de l'agent de remplissage inorganique représentent entre 3 % en poids et 15 % en poids de la composition du revêtement intermédiaire qui résiste à l'usure.

2. Revêtement antiadhésif résistant à l'usure et anticorrosif selon la revendication 1, dans lequel ledit liant polymère qui résiste à la chaleur est constitué par un ou plusieurs liants polymères sélectionnés dans le groupe constitué par un polyamide - imide (PAI), une polyéthersulfone (PES), un polyimide (PI), un sulfure de polyphénylène (PPS), une polyéther - éther - cétone (PEEK), et une résine de silicone.

3. Revêtement antiadhésif résistant à l'usure et anticorrosif selon la revendication 1 ou la revendication 2, dans lequel le liant polymère qui résiste à la chaleur est constitué par un ou plusieurs liants polymères sélectionnés dans le groupe constitué par PAI, PPS et PES.

4. Revêtement antiadhésif résistant à l'usure et anticorrosif selon la revendication 1, dans lequel la taille des particules dudit agent de remplissage pigmenté est inférieure à 2 micromètres.

5. Revêtement antiadhésif résistant à l'usure et anticorrosif selon la revendication 1, dans lequel l'épaisseur du film sec de ladite couche primaire anticorrosif est au moins égale à 10 micromètres.

6. Revêtement antiadhésif résistant à l'usure et anticorrosif selon la revendication 1 ou la revendication 5, dans lequel l'épaisseur du film sec de ladite couche primaire anticorrosif est égale à 15 micromètres.

7. Revêtement antiadhésif résistant à l'usure et anticorrosif selon la revendication 1, dans lequel la composition de ladite couche primaire anticorrosive est une dispersion aqueuse.

8. Revêtement antiadhésif résistant à l'usure et anticorrosif selon la revendication 1, dans lequel la composition de ladite couche primaire anticorrosive comprend un liquide organique.

9. Revêtement antiadhésif résistant à l'usure et anticorrosif selon la revendication 1, dans lequel la dureté Knoop des particules de l'agent de remplissage inorganique dans ledit revêtement intermédiaire qui résiste à l'usure est au moins égale à 1000.

10. Revêtement antiadhésif résistant à l'usure et anticorrosif selon la revendication 1, dans lequel les particules de l'agent de remplissage inorganique sont sélectionnées parmi un nitrure, un carbure, un borure, un oxyde, des particules métalliques ou un diamant.

11. Revêtement antiadhésif résistant à l'usure et anticorrosif selon la revendication 1 ou la revendication 10, dans lequel lesdites particules de l'agent de remplissage inorganique sont de préférence un carbure de silicium, un diamant ou un oxyde d'aluminium.

12. Revêtement antiadhésif résistant à l'usure et anticorrosif selon la revendication 1 ou la revendication 10, dans lequel la taille des particules desdites particules de l'agent de remplissage inorganique est inférieure à 50 micromètres.

13. Revêtement antiadhésif résistant à l'usure et anticorrosif selon la revendication 1 ou la revendication 10, dans lequel la taille des particules desdites particules de l'agent de remplissage inorganique, est inférieure à 40 micromètres.

14. Revêtement antiadhésif résistant à l'usure et anticorrosif selon la revendication 1 ou la revendication 10, dans lequel la taille des particules desdites particules de l'agent de remplissage inorganique, est comprise entre 5 micromètres et 35 micromètres.

15. Revêtement antiadhésif résistant à l'usure et anticorrosif selon la revendication 1, dans lequel lesdites particules de l'agent de remplissage inorganique représentent entre 5 % en poids et 10 % en poids de la composition du revêtement intermédiaire qui résiste à l'usure.

16. Revêtement antiadhésif résistant à l'usure et anticorrosif selon la revendication 1, dans lequel ledit polymère fluoré est un polytétrafluoroéthylène (PTFE).

17. Revêtement antiadhésif résistant à l'usure et anticorrosif selon la revendication 1, dans lequel l'épaisseur du film sec dudit revêtement antiadhésif est supérieure à 40 micromètres.

18. Revêtement antiadhésif résistant à l'usure et anticorrosif selon la revendication 1 ou la revendication 17, dans lequel l'épaisseur du film sec dudit revêtement antiadhésif est comprise entre 40 micromètres et 55 micromètres.

19. Procédé de revêtement d'un revêtement antiadhésif résistant à l'usure et anticorrosif selon l'une quelconque des revendications 1 à 18, comprenant les étapes consistant à :
1) appliquer un traitement de nettoyage et de rugosification à la surface d'un substrat ;
2) appliquer la composition de couche primaire anticorrosive sur la surface du substrat, et sécher la couche primaire pendant 10 minutes tout en maintenant la température de substrat à 120 °C ± 10 °C ;
3) après avoir refroidi la couche primaire à la température ambiante de manière manuelle et naturelle, appliquer alors sur la couche primaire la composition de revêtement intermédiaire qui résiste à l'usure ;
4) avant de sécher complètement le revêtement intermédiaire qui résiste à l'usure, appliquer la composition de revêtement supérieur sur le revêtement intermédiaire au moyen d'un traitement humide - humide ;
5) une fois que le revêtement est achevé, chauffer le revêtement composite appliqué sur la surface du substrat pendant une durée comprise entre 5 minutes et 10 minutes, à une température comprise entre 380 °C et 400 °C de façon à faire fondre de manière synchrone toutes les couches de revêtement sur le substrat.

20. Procédé de revêtement d'un revêtement antiadhésif résistant à l'usure et anticorrosif selon la revendication 19, dans lequel ledit procédé de revêtement est un revêtement par pulvérisation, ledit procédé de traitement de rugosification est une gravure à l'acide, un décapage au sable, un polissage mat, ledit substrat est un métal ou une céramique.
